# EUROPÄISCHE PATENTSCHRIFT

(11) **EP 1 715 975 B1**
(45) Veröffentlichungstag und Bekanntmachung des Hinweises auf die Patenterteilung: **07.05.2008**
(21) Anmeldenummer: 05706188.9
(22) Anmeldetag: 14.02.2005
(51) Int. Cl.: B23C 5/22

(54) **HOCHGESCHWINDIGKEITSFRÄSER**
HIGH-SPEED MILLING CUTTER
FRAISE A VITESSE ELEVEE

(30) Priorität: 16.02.2004 AT 11204 U
(43) Veröffentlichungstag der Anmeldung: 02.11.2006
(73) Patentinhaber: CERATIZIT Austria Gesellschaft m.b.H., 6600 Reutte /Tirol (AT)
(72) Erfinder: OBKIRCHER, Peter Ceratizit UK, Warrington WA4 3JX (GB); MALE, Helmut, A-6600 Höfen (AT)
(86) Internationale Anmeldenummer: PCT/AT2005/000047
(87) Internationale Veröffentlichungsnummer: WO 2005/077581

(56) Entgegenhaltungen:
- DE-A1- 2 854 299
- US-A- 5 542 795
- US-A1- 2003 219 319

## Beschreibung

Die Erfindung betrifft einen Hochgeschwindigkeitsfräser aus einem Werkzeuggrundkörper und aus mindestens einem plattenförmigen Schneideinsatz mit einer konvexen, in etwa bogenförmigen Schneidkante, welcher in einem Plattensitz des Werkzeuggrundkörpers in seiner Lage im wesentlichen fixiert befestigt ist und wobei Plattensitz und Schneideinsatz jeweils ein Passelement mit gegenseitigen Kontaktflächen zur Aufnahme der im Einsatz auftretenden Fliehkräfte aufweisen.

Um eine möglichst rationelle, spanabhebende Bearbeitung zu ermöglichen, kommt es insbesondere bei der Fräsbearbeitung von Werkstücken aus Leichtmetall wie z.B. Aluminium zum Einsatz von Hochgeschwindigkeitsverfahren bei denen die Fräswerkzeuge mit Drehzahlen von bis zu 100.000 Umdrehungen pro Minute arbeiten. Durch diese hohen Drehzahlen treten am Fräswerkzeug sehr hohe Fliehkräfte auf, durch welche die einzelnen Werkzeugteile aufs Äußerste beansprucht werden. So werden insbesondere die Klemmschrauben, mit denen die Schneideinsätze vielfach am Werkzeuggrundkörper befestigt sind, durch die auf die Schneideinsätze einwirkenden Fliehkräfte sehr stark auf Abscherung beansprucht. Um die Klemmschrauben von diesen auftretenden Scherkräften weitgehend zu entlasten ist es bekannt, spezielle Passelemente zwischen den Schneidplatten und dem Plattensitz des Werkzeuggrundkörpers vorzusehen, welche den Großteil der auftretenden Fliehkräfte aufnehmen, um damit zu verhindern, dass die Klemmschrauben durch eine sich am Plattensitz verschiebende Schneidplatte zu stark auf Abscherung beansprucht werden.

Bekannt geworden sind dabei Schneideinsätze, die mit dem Plattensitz über eine Nut-Feder-Verbindung in Eingriff stehen. In der Regel weist dabei die Auflagefläche des Schneideinsatzes eine gerade, federförmige Erhebung auf, die in eine entsprechend geformte Nut im Plattensitz des Werkzeuggrundkörpers eingreift. In der Praxis ist es jedoch nicht immer möglich ist die gegenseitigen Kontaktflächen der Nut-Feder-Verbindung genau senkrecht zu den auftretenden Fliehkräften auszurichten, weshalb es zu Kraftkomponenten kommt, welche auf den Schneideinsatz auch parallel zu den Kontaktflächen einwirken. Daher sind diese Kontaktflächen für eine eindeutige Positionierung der Schneidkante und damit eine genaue Festlegung des Plan- und Rundlaufes des Fräswerkzeuges nicht ausreichend und es kommt zu einer in Bezug auf die Kontaktflächen seitlichen Lageveränderung des Schneideinsatzes. Diese seitliche Lageveränderung kann zwar theoretisch durch die Klemmschrauben aufgefangen werden, dies erfolgt aber in der Praxis nur unzureichend, da dann wieder die Fertigungstoleranzen der Schraubenbohrungen wirksam werden. Es kann daher bei derartigen Fräswerkzeugen zu erheblichen Veränderungen in der Rotationsgeometrie des Fräswerkzeuges aufgrund der im Betrieb einwirkenden Fliehkräfte kommen.

In der DE-OS 35 33 125 sind als formschlüssige Verbindungen zwischen Schneideinsatz und Plattensitz, welche die Fliehkräfte aufnehmen sollen, miteinander in Eingriff stehende Verzahnungen beschrieben, deren Zähne parallel zur Fräserachse verlaufen und einen bestimmten Flankenwinkel aufweisen. In diesem Fall sind die gegenseitigen Kontaktflächen zwar ziemlich genau senkrecht zu den auftretenden Fliehkräften ausgerichtet und es treten kaum Kraftkomponenten parallel zu den Kontaktflächen auf. Der Nachteil einer derartigen Ausführung liegt jedoch darin, dass durch die Vielzahl der gegenseitigen Kontaktflächen eine Überbestimmung vorliegt, wodurch keine eindeutige Positionierung der Schneideinsätze im Werkzeuggrundkörper gewährleistet ist.

Die US 2003 219319 A1 beschreibt ein Schneidwerkzeug für die spanabhebende Bearbeitung, bei welchem auf einem Werkzeuggrundkörper ein oder mehrere Schneideinsätze, mit einer kreisförmigen Schneidkante, drehbar zum Werkzuggrundköper befestigt sind. Die gegenseitigen Kontaktflächen von Schneideinsatz und Werkzeuggrundkörper weisen ein oder mehrere zusammenwirkende Passelemente, in Form von kreisförmigen Nut-Federverbindungen auf. Bei einem derartigen Schneidwerkzeug sind die Schneidsätze gezielt drehbar angeordnet und werden durch die bei der Zerspanung auftretenden axialen, radialen und tangentialen Kräften in Rotation versetzt, wodurch die Zerspanungsleistung verbessert und der Verschleiß der Schneideinsätze verringert werden soll. Ein Einsatz derartiger Schneidwerkzeuge zum Hochgeschwindigkeitsfräsen ist in der Regel nicht möglich.

Die Aufgabe der vorliegenden Erfindung ist es daher, bei Hochgeschwindigkeitsfräsern mit Schneideinsätzen mit einer konvexen, in etwa bogenförmigen Schneidkante einen Formschluss zwischen Schneideinsatz und Werkzeuggrundkörper zu schaffen, durch den die Klemmelemente zur Sicherung des Schneideinsatzes von den im Einsatz auftretenden Belastungen, die durch die Fliehkräfte hervorgerufen werden, weitgehend entlastet sind und durch den möglichst geringe Maßabweichungen in der Rotationsgeometrie auftreten, auch dann, wenn die Kontaktflächen des Formschlusses nicht senkrecht zu den auftretenden Fliehkräften ausgerichtet sind.

Erfindungsgemäß wird dies dadurch erreicht, dass die Kontaktfläche des ersten Passelementes kreisbogenförmig, in etwa konzentrisch zur Schneidkante ausgeführt ist und dass die Kontaktfläche des zweiten Passelementes ebenfalls kreisbogenförmig, in etwa konzentrisch zur Schneidkante ausgeführt ist oder aus mindestens zwei Kontaktzonen besteht, die auf einem imaginären Kreisbogen, in etwa konzentrisch zur Schneidkante liegen, wobei die Kontaktfläche bzw. der imaginäre Kreisbogen mit der Kontaktfläche des ersten Passelementes zusammenfällt.

Durch eine derartige Ausgestaltung wird erreicht, dass allein durch die Passgenauigkeit der gegenseitigen Kontaktflächen der Passelemente der Flugkreis und damit die Rotationsgeometrie des Fräswerkzeuges bestimmt wird. Durch die Fliehkräfte hervorgerufene seitliche Kraftkomponenten, welche nach dem Stand der Technik eine seitliche Bewegung des Schneideinsatzes und damit eine Veränderung der Rotationsgeometrie hervorrufen würden, bewirken hier lediglich eine Lageänderung der Schneidplatte entlang der kreisförmigen Kontaktfläche. Da diese Kontaktfläche in etwa konzentrisch zur Schneidkante verläuft, wird dadurch kaum eine Änderung des Flugkreises und damit Veränderung der Rotationsgeometrie bewirkt.

Besonders vorteilhaft ist es, wenn sowohl die Kontaktfläche des ersten Passelementes als auch jene des zweiten Passelementes kreisbogenförmig ausgeführt ist. Auf diese Weise können die Kontaktflächen besonders leicht hergestellt werden.

Als besonders bevorzugte Variante eines erfindungsgemäßen Fräswerkzeuges hat sich die Verwendung eines in der Grundform ringsegmentförmigen Schneideinsatzes bewährt. In diesem Fall weist der Schneideinsatz eine einzige Schneidkante auf. Der Winkelbereich des Kreissegments kann dabei unterschiedlich sein. In der Praxis haben sich je nach Anwendungsfall Ringsegmente mit einem Winkelbereich von etwa 70° und von etwa 120° bewährt. Der Plattensitz des Werkzeugrundkörpers wird dabei vorteilhafterweise auf den Schneideinsatz mit dem größeren Winkelbereich ausgelegt, wobei zur Festlegung des Schneideinsatzes beispielsweise zwei Klemmschrauben vorgesehen sind. In einem derartig ausgelegten Werkzeugrundkörper ist dann auch ein Schneideinsatz mit einem kleineren Winkelbereich einsetzbar, der dann nur mit einer Klemmschraube befestigt wird. In die freibleibende Lücke des Plattensitzes wird dann ein entsprechend angepasster Platzhalter ohne Zerspanungsfunktion mit Hilfe der zweiten Klemmschraube befestigt.

Genauso ist es aber denkbar, den Schneideinsatz mit zwei gegenüber liegenden konvexen kreisbogenförmigen Schneidkanten zu versehen, wodurch eine zweifache Verwendung des Schneideinsatzes ermöglicht wird.

Besonders vorteilhaft ist es, wenn die einzelnen Passelemente am Hochgeschwindigkeitsfräswerkzeug auf bekannte Weise als Nut-Feder-Verbindung ausgeführt sind. Dadurch ergibt sich eine besonders platzsparende Ausgestaltung von Schneideinsatz und Plattensitz.

Das federförmige Passelement kann sowohl am Schneideinsatz, als auch am Plattensitz und das nutförmigen Passelement an den entsprechend anderen Werkzeugteilen ausgeführt sein. Besonders bewährt hat es sich jedoch, wenn das federförmige Passelement am Schneideinsatz und das nutförmige Passelement am Plattensitz ausgeführt ist. Dadurch wird eine unnötige Schwächung des in der Regel dünnen plattenförmigen Schneideinsatzes vermieden. Durch eine mehr oder weniger große Dimensionierung des federförmigen Passelementes in seiner Breite wird eine Anpassung des Schneideinsatzes an die im Betrieb auftretenden Fliehkräfte in Abhängigkeit von der Schneideinsatzgröße ermöglicht, so dass bei allen Bedingungen eine ausreichende Stabilität des Schneideinsatzes gewährleistet ist.

Im Folgenden wird die Erfindung an Hand von Figuren näher erläutert.

Es zeigen:

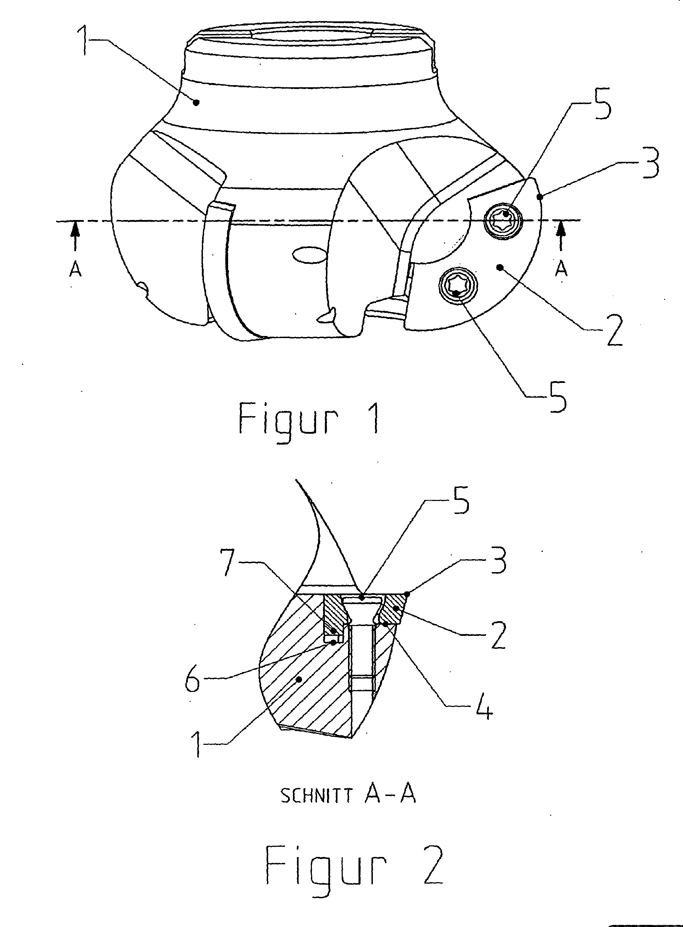

- Fig. 1: ein erfindungsgemäßes Fräswerkzeug in Draufsicht
- Fig. 2: eine Teilansicht des Fräswerkzeuges nach Fig. 1 im Schnitt
- Fig. 3: das Fräswerkzeug nach Fig. 1 ohne Schneideinsatz

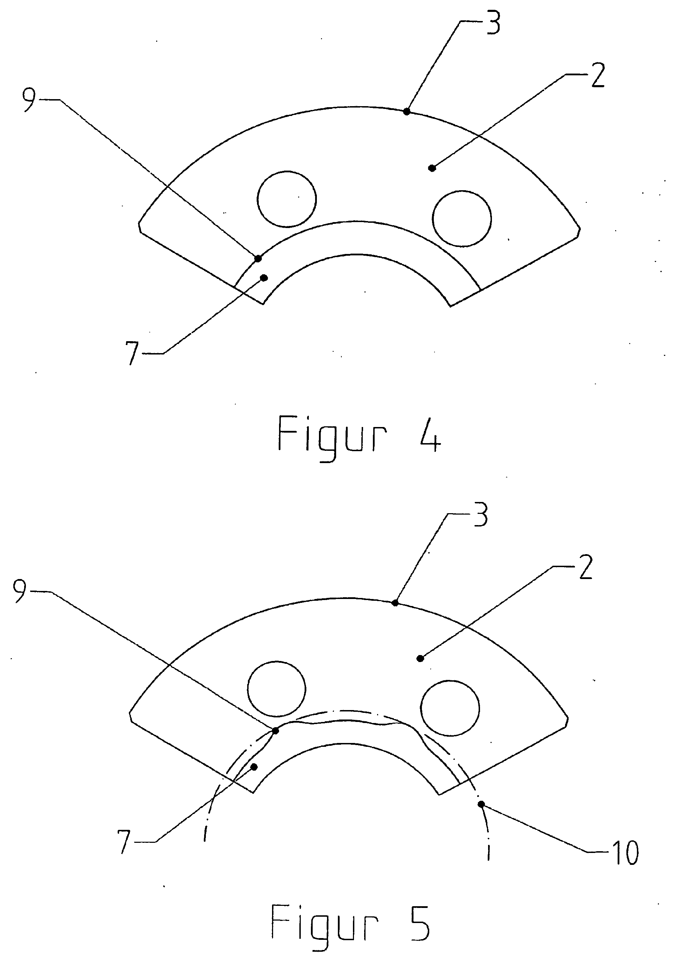

- Fig. 4: den Schneideinsatz für ein erfindungsgemäßes Fräswerkzeug in Draufsicht auf die Unterseite
- Fig. 5: die Variante eines Schneideinsatzes für ein erfindungsgemäßes Fräswerkzeug in Draufsicht auf die Unterseite

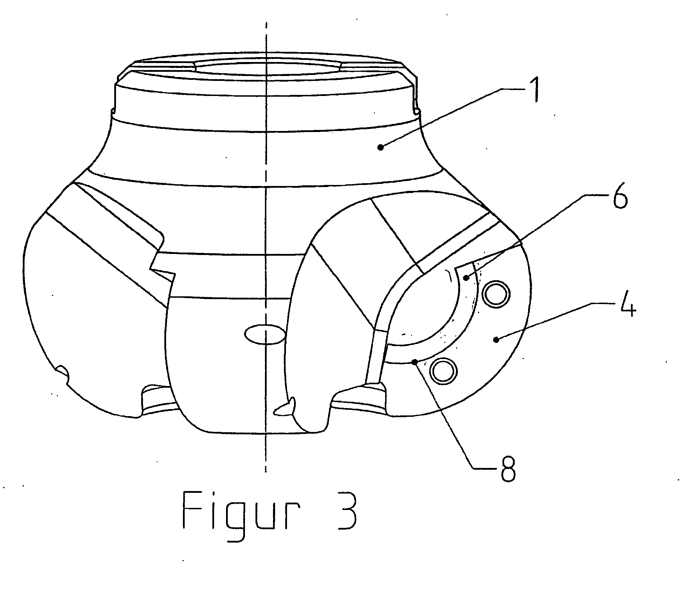

Das erfindungsgemäße Fräswerkzeug besteht aus einem Werkzeugrundkörper -1- mit 3 kreissegmentförmigen Schneideinsätzen -2- mit einem Kreissegmentwinkel von etwa 120° die in gleichen Winkelabständen am Umfang des Werkzeuggrundkörpers -1- befestigt sind. Ein Plattensitz -4- zur Aufnahme eines Schneideinsatzes -2- ist in Figur 3 zu sehen. Der Plattensitz -4- ist etwa der Form des Schneideinsatzes -2- angepasst und weist an der Innenseite des Werkzuggrundkörpers -1- eine kreisbogenförmige Nut -6- mit einer Kontaktfläche -8- auf. In diese Nut -6- greift eine federförmige Erhebung -7-, die an der Unterseite des Schneideinsatzes -2- vorgesehen ist, ein. Die federförmige Erhebung -7- ist an dem Ende des kreissegmentförmigen Schneideinsatzes -2- vorgesehen das der kreisbogenförmigen Schneidkante -3- gegenüberliegt und verläuft konzentrisch zur Schneidkante -3 -. Der Schneideinsatz -2- ist mit zwei Schrauben -5-, die in entsprechende Bohrungen im Werkzeuggrundkörper -1- eingreifen, am Plattensitz -4- befestigt. Im befestigten Zustand liegen die Kontaktfläche -8- in der Nut -6- des Plattensites -4- und die Kontaktfläche -9-, an der stegförmigen Erhebung -7- des Schneideinsatzes -2- aneinander an, und verhindern weitgehend Maßabweichungen in der Rotationsgeometrie im Einsatz des Fräswerkzeuges. In Figur 6 ist die Variante eines Schneideinsatzes -2- für ein erfindungsgemäßes Fräswerkzeug dargestellt, bei der die stegförmige Erhebung -7- an der der Schneidkante -3- zugewandten Seite eine Kontaktfläche -9- in Form von zwei noppenförmigen Erhebungen mit Kontaktzonen aufweist, die auf einem imaginären Kreisbogen -10- liegen der mit der Kontaktfläche -8- in der Nut -7- des Plattensitzes zusammenfällt. Auf diese Weise ergibt sich eine besonders genaue Anlage der Kontaktflächen -8- und -9-.

In den Zeichnungen ist die bevorzugte Variante eines erfindungsgemäßen Fräswerkzeuges dargestellt, die Erfindung ist jedoch keinesfalls darauf beschränkt. So kann etwa das erste Passelement -6- nicht nur wie dargestellt am Plattensitz -4- sondern auch am Schneideinsatz -2- und dementsprechend das zweite Passelement -7- nicht am Schneideinsatz -2- sondern am Plattensitz -4- vorgesehen sein. Ebenso kann bei Ausführung der Passelemente -6-, -7- als Nut- Feder Verbindung das federförmige Passelement -6-, -7- am Plattensitz -4- und das nutförmige Passelement -6-, -7- am Schneideinsatz vorgesehen sein.

Desgleichen kann die Befestigung des Schneideinsatzes -2- nicht nur wie dargestellt durch Klemmschrauben -5-, sondern ebenso durch andere Klemmelemente, wie beispielsweise Keile oder Klemmpratzen, erfolgen.

## Patentansprüche

1. Hochgeschwindigkeitsfräser, bestehend aus einem Werkzeuggrundkörper (1) und aus mindestens einem plattenförmigen Schneideinsatz (2) mit einer konvexen, in etwa bogenförmigen Schneidkante (3), welcher in einem Plattensitz (4) des Werkzeuggrundkörpers (1) in seiner Lage im wesentlichen fixiert befestigt ist und wobei Plattensitz (4) und Schneideinsatz (2) jeweils ein Passelement (6,7) mit gegenseitigen Kontaktflächen (8,9) zur Aufnahme der im Einsatz auftretenden Fliehkräfte aufweisen,
**dadurch gekennzeichnet,**
**dass** die Kontaktfläche (8) des ersten Passelementes (6) kreisbogenförmig, in etwa konzentrisch zur Schneidkante (3) ausgeführt ist und dass die Kontaktfläche (9) des zweiten Passelementes (7) ebenfalls kreisbogenförmig, in etwa konzentrisch zur Schneidkante (3) ausgeführt ist oder aus mindestens zwei Kontaktzonen besteht, die auf einem imaginären Kreisbogen (10), in etwa konzentrisch zur Schneidkante (3) liegen, wobei die Kontaktfläche (9) bzw. der imaginäre Kreisbogen (10) mit der Kontaktfläche (8) des ersten Passelementes (6) zusammenfällt.

2. Hochgeschwindigkeitsfräser nach Anspruch 1, **dadurch gekennzeichnet, dass** der Schneideinsatz (2) die Grundform eines Ringsegmentes aufweist.

3. Hochgeschwindigkeitsfräser nach Anspruch 1 oder 2, **dadurch gekennzeichnet, dass** die Passelemente (6,7) als Nut-Feder-Verbindung ausgeführt sind.

4. Hochgeschwindigkeitsfräser nach Anspruch 3, **dadurch gekennzeichnet, dass** das federförmige Passelement (6) am Schneideinsatz (2) und das nutförmige Passelement (7) am Plattensitz (4) ausgeführt sind.

## Claims

1. High-speed milling cutter, comprising
a tool parent body (1) and at least one plate-shaped cutting insert (2), which has a convex, approximately arc-shaped cutting edge (3) and is fastened in an insert seat (4) of the tool parent body (1) so as to be substantially fixed in position, and insert seat (4) and cutting insert (2) each having a mating element (6,7) with mutual contact surfaces (8,9) for absorbing the centrifugal forces occurring during use,
**characterised**
**in that** the contact surface (8) of the first mating element (6) is designed in the shape of a circular arc, approximately concentrically with the cutting edge (3), and in that the contact surface (9) of the second mating element (7) is likewise designed in the shape of a circular arc, approximately concentrically with the cutting edge (3), or consists of at least two contact zones lying on an imaginary circular arc (10), approximately concentrically with the cutting edge (3), the contact surface (9) or the imaginary circular arc (10) coinciding with the contact surface (8) of the first mating element (6).

2. High-speed milling cutter according to Claim 1, **characterised in that** the cutting insert (2) has the basic shape of a ring segment.

3. High-speed milling cutter according to Claim 1 or 2, **characterised in that** the mating elements (6,7) are designed as a tongue-and-groove connection.

4. High-speed milling cutter according to Claim 3, **characterised in that** the tongue-shaped mating element (6) is formed on the cutting insert (2) and the groove-shaped mating element (7) is formed on the insert seat (4).

## Revendications

1. Fraise à vitesse élevée, se composant d'un corps de base (1) d'outil et d'au moins un insert de coupe (2) en forme de plaquette à arête de coupe convexe (3) approximativement en arc, qui est attaché dans un siège (4) de plaquette du corps de base (1) d'outil en y étant essentiellement fixé en position, dans laquelle le siège (4) de plaquette et l'insert de coupe (2) comportent chacun un élément adaptatif (6, 7), à surface de contact (8, 9) tournée vers l'autre élément, pour absorber les forces centrifuges générées en cours d'utilisation,
**caractérisée en ce que**
la surface de contact (8) du premier élément adaptatif (6) est en forme d'arc de cercle, agencé de façon approximativement concentrique à l'arête de coupe (3), et **en ce que** la surface de contact (9) du deuxième élément adaptatif (7) est également en forme d'arc de cercle, agencé de façon approximativement concentrique à l'arête de coupe (3), ou se compose au moins de deux zones de contact situées sur un arc de cercle imaginaire (10) agencé de façon approximativement concentrique à l'arête de coupe (3), la surface de contact (9) ou l'arc de cercle imaginaire (10) coïncidant avec la surface de contact (8) du premier élément adaptatif (6).

2. Fraise à vitesse élevée selon la revendication 1, **caractérisée en ce que** la forme de base de l'insert de coupe (2) est un segment annulaire.

3. Fraise à vitesse élevée selon la revendication 1 ou 2, **caractérisée en ce que** les éléments adaptatifs (6, 7) forment une connexion à emboîtement mâle femelle.

4. Fraise à vitesse élevée selon la revendication 3, **caractérisée en ce que** l'élément adaptatif (6) de type mâle est réalisé sur l'insert de coupe (2) et **en ce que** l'élément adaptatif (7) en forme de rainure est réalisé sur le siège (4) de plaquette.
